# EUROPEAN PATENT APPLICATION

(11) **EP 4 822 212 A1**
(43) Date of publication of application: **14.10.2026**
(21) Application number: 26164970.1
(22) Date of filing: 16.03.2026
(51) Int. Cl.: F16F 15/12, F16F 15/30, F16F 15/123, F16F 15/131

(54) **DAMPER DEVICE**

(30) Priority: 21.03.2025 JP 2025046708
(71) Applicant: AISIN CORPORATION, Kariya, Aichi 448-8650 (JP)
(72) Inventor: HAMAGUCHI, Toru, Aichi, 448-8650 (JP); OSUMI, Tomoya, Aichi, 448-8650 (JP); SUZUKI, Masanori, Aichi, 448-8650 (JP)
(74) Representative: Kramer Barske Schmidtchen Patentanwälte PartG mbB

(57) **Abstract**

A damper device (1) includes a first rotating member (10), a second rotating member (20), and a coil spring (40) compressed between the first rotating member (10) and the second rotating member (20). The first rotating member (10) includes a first plate member (100) forming an engine-side attachment surface (121), and an annular member (300) coupled to the first plate member (100). The first plate member (100) further forms an offset surface (132) facing to an engine side in the axial direction and offset from the engine-side attachment surface (121) to a side separated from the engine in the axial direction. A radial-direction area of the offset surface (132) includes an area being on a radial-direction outer side of the engine-side attachment surface (121) and on a radial-direction inner side of the coil spring (40). The annular member (300) overlaps with the offset surface (132) in the axial direction.

## Description

### TECHNICAL FIELD

This disclosure generally relates to a damper device.

### BACKGROUND DISCUSSION

A known damper device includes a coil spring to be compressed between two rotating members arranged in an axial direction, and damps an engine output and transmits the damped output to wheels. Such a damper device is disclosed in JP2015-161371A (Reference 1), for example.

In this type of damper device, inertia is maintained by an annular member provided at an outer peripheral portion of the rotating member on an engine side. Mass of the annular member affecting the inertia is one of parameters that determine a natural frequency of the damper device.

In the above-described conventional technique, an arrangement space for the annular member is limited, resulting in a problem that an adjustment range of the inertia (and the natural frequency) achieved by an arrangement method for the annular member is small. This is mainly because no space for the annular member substantially exists in an area being on an engine side in the axial direction and on an inner side of the coil spring in the radial direction. Meanwhile, the adjustment range can be increased by expanding the annular member outward in the radial direction in such a way as to have a larger diameter. However, in this case, a problem occurs in that a body size of the damper device in the radial direction is increased.

A need thus exists for a damper device that can increase an adjustment range of inertia achieved by an annular member without increasing a body size of the damper device in a radial direction.

### SUMMARY

According to one aspect, there is provided a damper device including a first rotating member, a second rotating member, and a coil spring. Power of an engine is input to the first rotating member, and thus the first rotating member is rotatable around a rotational axis extending in an axial direction. The second rotating member is rotatable around the rotational axis relative to the first rotating member. The coil spring is compressed between the first rotating member and the second rotating member. The first rotating member includes a first plate member and an annular member. The first plate member forms an engine-side attachment surface perpendicular to the rotational axis. The annular member has an annular shape around the rotational axis when viewed in the axial direction. The annular member is coupled to the first plate member. The first plate member further forms an offset surface being offset from the engine-side attachment surface in the axial direction, in an area being on a radial-direction outer side of the engine-side attachment surface and on a radial-direction inner side of the coil spring. The annular member overlaps with the offset surface when viewed in the axial direction.

According to this disclosure, in one aspect, an adjustment range of inertia achieved by the annular member can be increased without increasing a body size of the damper device in a radial direction.

### BRIEF DESCRIPTION OF THE DRAWINGS

The foregoing and additional features and characteristics of this disclosure will become more apparent from the following detailed description considered with the reference to the accompanying drawings, wherein:
FIG. 1 is a sectional view of a damper device according to this embodiment;
FIG. 2 is an illustration diagram of a hemmed bend structure of an attachment portion;
FIG. 3 is a sectional view of a damper device according to a modified example; and
FIG. 4 is a sectional view illustrating a part on an outer peripheral side in a damper device according to a comparative example.

### DETAILED DESCRIPTION

The following describes respective embodiments in detail with reference to the accompanying drawings. Dimensional ratios in the drawings are merely examples, and there is no limitation to these. In some cases, a shape or the like in the drawing is partially emphasized for convenience of the description. In some cases, in the drawing, for ease of viewing, the reference sign is assigned only to a part of a plurality of existing portions having the same attribute.

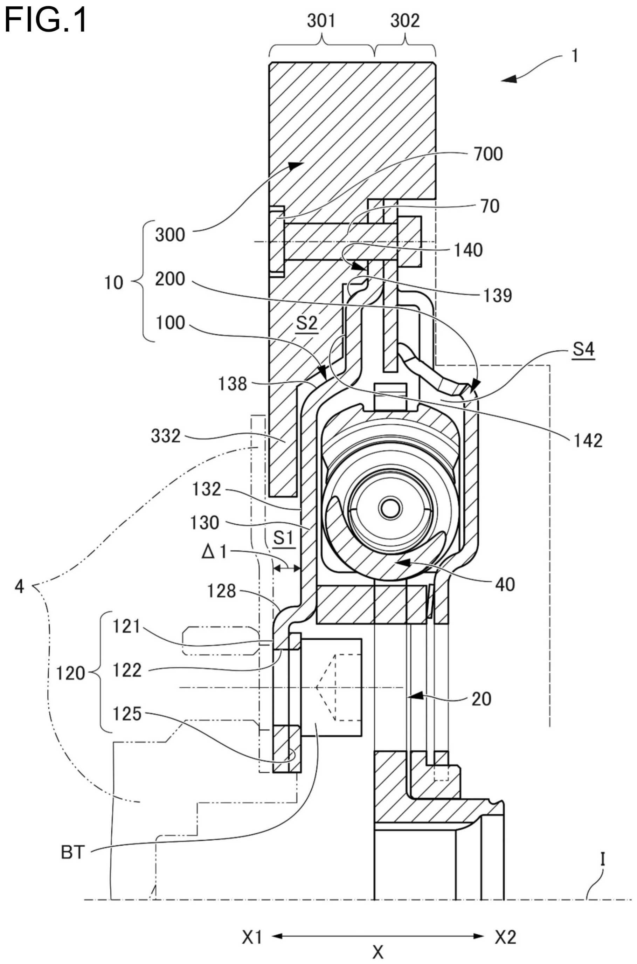

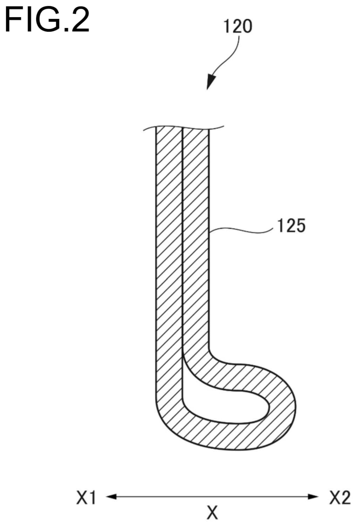

FIG. 1 is a sectional view of a damper device 1 according to this embodiment. FIG. 2 illustrates a hemmed bend structure of an attachment portion 120.

The damper device 1 is mounted on a vehicle powered by an engine (not illustrated). Alternatively, the damper device 1 may be mounted on a vehicle powered by a combination of an engine and a motor.

The damper device 1 is provided in a power transmission path from the engine to wheels. Typically, the damper device 1 is mounted at a position that is in the power transmission path from the engine to the wheels and that is on a side closest to the engine. For example, the damper device 1 includes an input end coupled to an output shaft (crankshaft) of the engine. In other words, power of the engine is input directly to the damper device 1.

In this embodiment, in one example, the damper device 1 is arranged between the engine and a transmission (not illustrated) in such a way that the power from the engine is transmitted to the transmission (not illustrated) via the damper device 1.

Here, an X direction and an X1 side and an X2 side as both sides in the X direction are defined in FIG. 1. In the following description, the X direction refers to a direction parallel to the axis I (FIG. 1) of the output shaft of the engine, an X1 side refers to a side closer to the engine in the axial direction, and an X2 side refers to a side closer to the transmission in the axial direction.

A radial direction refers to a radial direction with respect to the axis I as the center, and a circumferential direction refers to a circumferential direction with respect to the axis I as the center.

The damper device 1 includes a first rotating member 10, a second rotating member 20, and a coil spring 40.

The power of the engine is input to the first rotating member 10. The first rotating member 10 rotates integrally with the crankshaft. The first rotating member 10 has a rotational axis concentric with the output shaft of the engine. In other words, the first rotating member 10 is rotatable around the axis I.

The second rotating member 20 has a rotational axis concentric with the output shaft of the engine. In other words, the second rotating member 20 is rotatable around the axis I. For example, the second rotating member 20 is coupled to an input side of the transmission. The second rotating member 20 may be fitted into an X-direction central portion of the coil spring 40.

The coil spring 40 is compressed between the first rotating member 10 and the second rotating member 20. The coil spring 40 may be arranged in such a way that the coil axis of the coil spring 40 is oriented in the circumferential direction. In this case, the coil spring 40 expands and contracts depending on circumferential-direction relative displacement between the first rotating member 10 and the second rotating member 20. A plurality of the coil springs 40 may be arranged at an equal interval along the circumferential direction. Two or more kinds of the coil springs may be arranged depending on a required torsion property.

Here, details of the first rotating member 10 are further described.

The first rotating member 10 includes a first plate member 100, a second plate member 200, and an annular member 300.

The first plate member 100 is constituted by a plate material such as a metal plate. In this embodiment, in one example, the first plate member 100 is constituted by a plate material having a uniform thickness. When viewed in the X direction, the first plate member 100 has an annular shape extending around the axis I. FIG. 1 illustrates a section of the first plate member 100 at a specific circumferential-direction position (a specific angle around the axis I). However, the first plate member 100 may have the substantially equivalent section also at each of the other circumferential-direction positions. This also applies to each of the rotating members such as the second plate member 200 and the annular member 300 that are described below.

The first plate member 100 forms an engine-side attachment surface 121 perpendicular to the axis I. The first plate member 100 includes an attachment portion 120 on a radial-direction inner side. The attachment portion 120 forms the engine-side attachment surface 121. The engine-side attachment surface 121 is a surface included in the attachment portion 120 and located on an X1 side.

The attachment portion 120 includes a through-hole 122 formed for bolt fastening in such a way as to penetrate in the X direction. The number (the number along the circumferential direction) of the through-holes 122 is arbitrary. The first rotating member 10 is coupled to an engine-side member 4 by a bolt BT (only the head is illustrated) that is fastened to the attachment portion 120 of the first plate member 100. Unless otherwise particularly mentioned, the engine-side member 4 refers to an arbitrary one of various engine-related members located on an engine side of the damper device 1 in the X direction.

As illustrated in FIG. 2, the attachment portion 120 preferably has the hemmed bend structure made by a hemming process (folding-back process). In other words, the attachment portion 120 has a double-plate structure formed by folding back a plate-material edge 125. Thereby, the strength of the attachment portion 120 can be enhanced. Enhancing the strength of the attachment portion 120 can cope with a mass increase (e.g., the below-described extension of an inner diameter) of the annular member 300. Subjecting the plate material to a plurality of bending steps such as those in the hemming process achieves a smooth surface located at the bent end portion and contacting against the engine-side member 4. Thereby, scratches can be prevented from being formed at the time of assembling. The hemming process prevents a gap from occurring between the double plates, and thus, a bearing surface of the bolt BT is easily made perpendicular to the bolt axis so that bolt loosening can be reduced.

The first plate member 100 includes an intermediate portion 130 provided on a radial-direction outer side of the attachment portion 120 via a stepped portion 128.

The stepped portion 128 includes an X1-side end portion starting from a radial-direction outer end portion of the attachment portion 120, and includes an X2-side end portion terminating at a radial-direction inner end portion of the intermediate portion 130. The stepped portion 128 may be substantially parallel to the X direction, or may be inclined in such a way as to extend to a radial-direction outer side while extending to an X2 side. A corner R may be formed between the stepped portion 128 and the attachment portion 120, and a corner R may be formed between the stepped portion 128 and the intermediate portion 130. The stepped portion 128 may also be formed to include two or more steps. In other words, the stepped portion 128 may be formed to include a plurality of the steps that are connected successively to each other in the radial direction via a flat portion parallel to an offset surface 132.

The intermediate portion 130 includes the offset surface 132 parallel to the engine-side attachment surface 121. The intermediate portion 130 may be formed together with the stepped portion 128 by a drawing process on the plate material for the first plate member 100. In this case, a draw depth (i.e., a length of the stepped portion 128 in the X direction) may be determined by taking into consideration the workability, the availability (a requirement for preventing interference with other members) of a space on an X2 side, and a required offset amount Δ1 between the engine-side attachment surface 121 (or the engine-side member 4) and the offset surface 132.

Here, as the offset amount Δ1 increases, an X-direction space between the offset surface 132 of the first plate member 100 and the engine side increases. Hereinafter, the space between the offset surface 132 of the first plate member 100 and the engine side is referred to also as "inner-diameter-side space S1". The inner-diameter-side space S1 is formed on a radial-direction outer side of the attachment portion 120 in such a way as to be adjacent to the attachment portion 120.

As the inner-diameter-side space S1 increases, the below-described annular member 300 can be more easily arranged in the inner-diameter-side space S1. Further, an upper limit of an X-direction thickness of the below-described annular member 300 in the inner-diameter-side space S1 can be increased. Increasing an upper limit of an X-direction thickness of the annular member 300 enhances a degree of design freedom for a thickness of the annular member 300 in the inner-diameter-side space S1, and can thus widen an adjustment range of the inertia.

In this embodiment, the offset surface 132 is formed on the entire intermediate portion 130. However, slight unevenness or a hole in the X-direction may be formed depending on a circumferential-direction position or a radial-direction position. For example, a recess or hole to an X2 side in the X-direction may be formed in the intermediate portion 130, in an area that overlaps with the coil spring 40 when viewed in the X-direction. Alternatively, when strength of the intermediate portion 130 can be secured, a cutout may be formed in a part of the intermediate portion 130 to reduce a size in the X-direction so that the coil spring 40 is arranged partially beyond the intermediate portion 130 to an X1 side. In this case, the coil spring 40 may be arranged partially beyond the intermediate portion 130 to an X1 side, within an area (i.e., within an area for enabling a necessary clearance to be secured) in which an X1-side portion of the coil spring 40 does not contact with a radial-direction inner portion 332 of the annular member 300.

In this embodiment, the intermediate portion 130 extends from a radial-direction inner side of the coil spring 40 to a radial-direction outer side. In other words, the stepped portion 128 is located on a radial-direction inner side of the coil spring 40. Thus, the inner-diameter-side space S1 extends to reach a position on a radial-direction inner side of the coil spring 40. Thereby, an adjustment range of the inertia can be made larger than in a case where the inner-diameter-side space S1 does not reach a position on a radial-direction inner side of the coil spring 40.

In this embodiment, the intermediate portion 130 extends to reach a position on a radial-direction outer side of the coil spring 40. In other words, the intermediate portion 130 extends in the radial direction, on an X-direction X1 side of the coil spring 40, and can thus reach the position on a radial-direction outer side of the coil spring 40.

Here, an X2-side position in the intermediate portion 130 in the X direction may be determined based on an X-direction position of the coil spring 40. When a thickness of the first plate member 100 is uniform, as an X2-side position in the intermediate portion 130 in the X direction is more shifted to an X2 side, a size of the inner-diameter-side space S1 in the X direction becomes larger. Accordingly, an X2-side position in the intermediate portion 130 in the X direction may be set in such a way as to be shifted to an X2 side to the greatest possible extent in relation to the X-direction position of the coil spring 40.

The first plate member 100 includes an outer peripheral portion 140 provided on a radial-direction outer side of the intermediate portion 130 via a stepped portion 138.

The stepped portion 138 includes an X1-side end portion starting from a radial-direction outer end portion of the intermediate portion 130, and includes an X2-side end portion terminating at a radial-direction inner end portion of the outer peripheral portion 140. The stepped portion 138 may be substantially parallel to the X direction, or may be inclined in such a way as to extend to a radial-direction outer side while extending to an X2 side. A corner R may be formed between the stepped portion 138 and the intermediate portion 130, and a corner R may be formed between the stepped portion 138 and the outer peripheral portion 140.

A height (a size in the X direction) of the stepped portion 138 is arbitrary, but may be determined based on a diameter of the coil spring 40. For example, a height of the stepped portion 138 may be set to be smaller than a coil radius of the coil spring 40 and larger than a height of the stepped portion 128.

The outer peripheral portion 140 includes an engine-side surface 142 parallel to the engine-side attachment surface 121. The outer peripheral portion 140 may include an additional stepped portion 139 on a radial-direction outer side, in addition to the above-described stepped portion 138. The outer peripheral portion 140 may be formed together with the stepped portion 138 (and the stepped portion 139) by a drawing process on the plate material of the first plate member 100. In this case, a draw depth (i.e., a length of the stepped portion 138 and the like in the X direction) may be determined taking into consideration the workability and the availability of a space on an X2 side. A total height (a size in the X-direction) of the stepped portion 138 and the stepped portion 139 may be substantially equal to the coil radius of the coil spring 40.

Similarly to the case of the inner-diameter-side space S1, a space (hereinafter, referred to as "outer-diameter-side space S2") between the outer peripheral portion 140 and an engine side can be used as a space for arranging the below-described annular member 300. In this case, as a size of the outer-diameter-side space S2 in the X direction increases, the annular member 300 having a large size in the X direction can be more easily arranged. In other words, an upper limit of an X-direction thickness of the below-described annular member 300 in the outer-diameter-side space S2 can be increased. Increasing an upper limit of an X-direction thickness of the annular member 300 enhances design freedom for a thickness of the annular member 300 in the outer-diameter-side space S2, and can thus widen an adjustment range of the inertia.

In this embodiment, as described above, the intermediate portion 130 extends to reach a position on a radial-direction outer side of the coil spring 40. Accordingly, the outer peripheral portion 140 extends to a radial-direction outer side from a position on a radial-direction outer side of the coil spring 40. In other words, the stepped portion 138 is located on a radial-direction outer side of the coil spring 40.

The second plate member 200 is constituted by a plate material equivalent to that of the first plate member 100. The second plate member 200 is located on an X2 side of the first plate member 100. The second plate member 200 is arranged in relation to the first plate member 100 in such a way that the coil spring 40 and the second rotating member 20 are located between the second plate member 200 and the first plate member 100 in the X direction. In other words, the second plate member 200 forms an arrangement space S4 between the second plate member 200 and the first plate member 100 in the X direction. In the arrangement space S4, the second rotating member 20 and the coil spring 40 are arranged.

When viewed in the X direction, the annular member 300 has an annular shape whose center is the axis I. The annular member 300 may have a shape that is line-symmetric with respect to any line passing through the axis I, when viewed in the X direction.

The annular member 300 is attached to the first plate member 100, and rotates integrally with the first plate member 100. The annular member 300 is fixed to the outer peripheral portion 140 of the first plate member 100 by a coupling member 70.

The annular member 300 has the mass sufficient for securing the required inertia of the first rotating member 10. The mass of the annular member 300 is set appropriately depending on the required inertia of the first rotating member 10. The inertia is one of parameters that determine a natural frequency of the damper device 1.

In this embodiment, as described above, a relatively wide inner-diameter-side space S1 is formed. For this reason, an adjustment range of the inertia (and the natural frequency) achieved by an arrangement method for the annular member 300 can be effectively increased.

Specifically, as illustrated in FIG. 1, the radial-direction inner portion 332 of the annular member 300 extends into the inner-diameter-side space S1. In other words, when viewed in the X direction, the annular member 300 overlaps with the intermediate portion 130 (offset surface 132). Thereby, the maximum mass that the annular member 300 can be made to have can be increased as compared to a configuration without the radial-direction inner portion 332. In other words, an upper limit of an adjustment range of the inertia achieved by an arrangement method for the annular member 300 can be effectively increased.

In the example illustrated in FIG. 1, the annular member 300 extends into the inner-diameter-side space S1 and the outer-diameter-side space S2. In this case, an X-direction thickness of a part included in the annular member 300 and extending in the outer-diameter-side space S2 is significantly larger than an X-direction thickness of a part included in the annular member 300 and extending in the inner-diameter-side space S1. An X-direction thickness of the annular member 300 increases toward a radial-direction outer side, in a stepped portion corresponding to the stepped portion 138. Thereby, the mass of the annular member 300 can be efficiently increased.

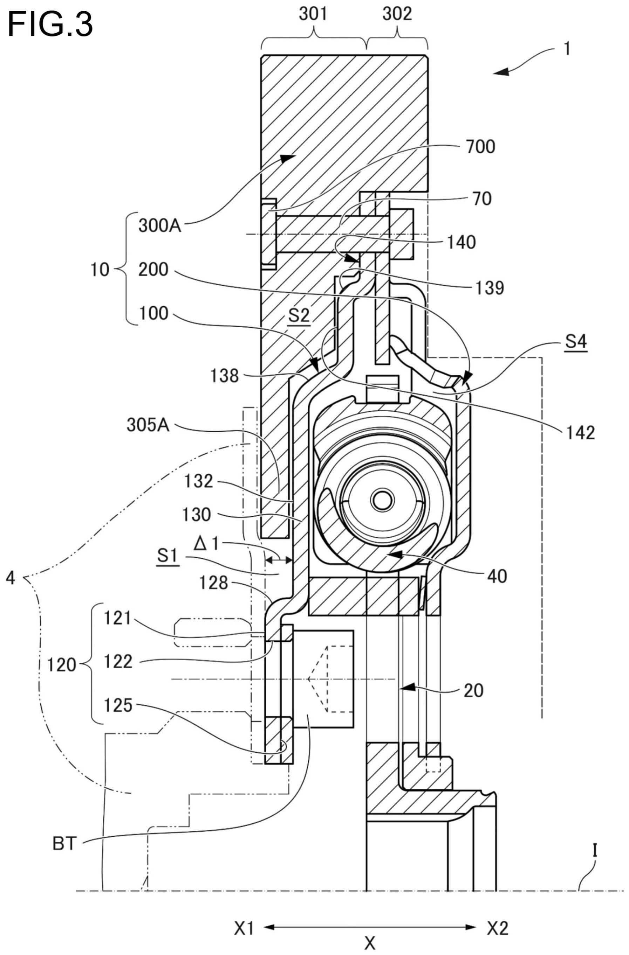

In the example illustrated in FIG. 1, the annular member 300 is provided in such a way as to occupy a part (a radial-direction outer part) in the inner-diameter-side space S1. However, the annular member such as an annular member 300A illustrated in FIG. 3 may be provided in such a way as to occupy the entire inner-diameter side space S1. In other words, the annular member 300A includes an additional portion 305A on an inner-diameter side of the annular member 300.

Thus, according to this embodiment, using the relatively large inner-diameter-side space S1 can reduce a part that is included in the annular member 300 and that could occupy another space. For example, decreasing an outer diameter of the annular member 300 can reduce a body size of the first rotating member 10 in the radial direction, resulting in a reduction in a body size of the damper device 1 in the radial direction.

According to this embodiment, using the relatively large inner-diameter-side space S1 can reduce a size of a portion 302 (hereinafter, referred to also as "second portion 302") included in the annular member 300 and located on an X2 side of the first plate member 100. In other words, the second portion 302 included in the annular member 300 and located on an X2 side of the first plate member 100 can be made significantly smaller than a portion 301 (hereinafter, referred to also as "first portion 301") included in the annular member 300 and located on an X1 side of the first plate member 100. Thereby, for example, as illustrated in FIG. 1, the second portion 302 can be arranged in such a way as not to overlap with the first plate member 100 when viewed in the X direction. In other words, the entire second portion 302 can be located on a radial-direction outer side of the first plate member 100.

In a modified example, the second portion 302 may be omitted, and the annular member 300 may be constituted by only the first portion 301.

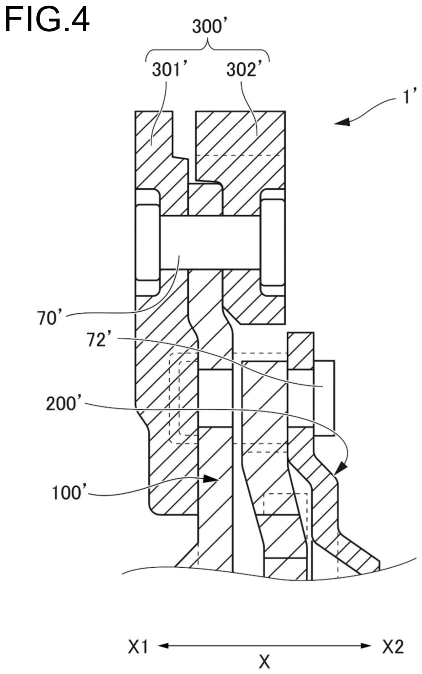

Here, further advantages of this embodiment are described in comparison with a comparative example illustrated in FIG. 4.

FIG. 4 is a sectional view illustrating a part on an outer peripheral side in a damper device 1' according to the comparative example.

In the comparative example, a second portion 302' of an annular member 300' is arranged in an area that is on an X-direction X2 side of a first plate member 100' and on a radial-direction inner side of a radial-direction outer edge portion of the first plate member 100'. In this comparative example, the first portion 301' and the second portion 302' need to be formed as separate members (two components). In other words, as in the configuration disclosed in Reference 1 described above, the annular member 300' needs to be divided into the two components, causing a problem such as an increase in the number of components and an increase in cost. In order to secure a clearance, the annular member 300' needs to be arranged at a position slightly separated to a radial-direction outer side from a radial-direction outer end surface of the first plate member 100'. Thus, mounting efficiency of the annular member 300' becomes unsatisfactory. In consideration of a plate thickness tolerance of the first plate member 100' or the like, the first portion 301' and the second portion 302' are difficult to cause to contact against each other in the X direction, and need to be separated from each other in the X direction. As a result, mounting efficiency of the annular member 300' becomes unsatisfactory.

In contrast to this, as described above, this embodiment can eliminate the various inconveniences that arise in the comparative example.

Next, referring again to FIG. 1, further features of the damper device 1 are described.

In this embodiment, the second rotating member 20 extends in a planar shape perpendicular to the axis I, at an X-direction central position (the X-direction position of the coil axis) of the coil spring 40, on a radial-direction inner side of the coil spring 40. This configuration can be made by enabling the coil spring 40 to be located at a position shifted to an X-direction X2 side by an amount of the stepped portion 128. Thereby, strength of the second rotating member 20 can be effectively enhanced.

In this embodiment, the first plate member 100, the second plate member 200, and the annular member 300 are fixed to each other by the common coupling member 70. In the comparative example described above with reference to FIG. 4, the second plate member 200' is fixed to the first plate member 100' by a member separate from a coupling member 70'. The comparative example needs the separate coupling member 72' for fixing the second plate member 200' to the first plate member 100', resulting in a problem such as an increase in the number of components and an increase in cost. In contrast to this, this embodiment can eliminate such an inconvenience. The annular member 300 can be maximized in size, and thus, an upper limit of an adjustment range of the inertia can be effectively increased.

The coupling member 70 is oriented in such a way that a riveted portion 700 is located on a side closer to the engine in the X direction. The riveted portion 700 is located to be flush with the engine-side attachment surface 121 or more distant from the engine than the engine-side attachment surface 121 in the X direction. Thereby, the annular member 300 can be maximized in size, and thus, an upper limit of an adjustment range of the inertia can be effectively increased.

Although each embodiment is described above in detail, this disclosure is not limited to the specific embodiment, and various modifications and alterations can be made within the scope described in Claims. All or a plurality of the constituents of the above-described embodiments can be combined.

For example, in the above-described embodiment, a side of the folded-back plate material end of the attachment portion 120 of the first rotating member 10 is located on a transmission side in the X direction, but the opposite arrangement may be made. In other words, a side of the folded-back plate material end of the attachment portion 120 of the first rotating member 10 may be located on an engine side in the X direction. In this case, when a height of the stepped portion 128 is fixed, an X-direction size of the inner-diameter-side space S1 can be increased by a plate thickness of the folded-back portion. For this reason, an upper limit of an adjustment range of the inertia can be further increased. Alternatively, reducing a step height of the stepped portion 128 while maintaining the offset amount Δ1 can decrease stress generated at the time of the step processing such as press working, and can thus enhance rigidity of the first plate member 100 as a plate-shaped member.

Further, the following discloses Supplementary Notes, concerning each of the above-described embodiments.

### [Supplementary Note 1]

A damper device including:
a first rotating member to which power of an engine is input and that is rotatable around a rotational axis extending in an axial direction;
a second rotating member that is rotatable around the rotational axis relative to the first rotating member; and
a coil spring that is compressed between the first rotating member and the second rotating member, wherein
the first rotating member includes:
   a first plate member that forms an engine-side attachment surface perpendicular to the rotational axis; and
   an annular member that has an annular shape around the rotational axis when viewed in the axial direction and that is coupled to the first plate member,
   the first plate member further forms an offset surface being offset from the engine-side attachment surface in the axial direction, in an area being on a radial-direction outer side of the engine-side attachment surface and on a radial-direction inner side of the coil spring, and
   the annular member overlaps with the offset surface when viewed in the axial direction.

### [Supplementary Note 2]

The damper device according to Supplementary Note 1, wherein
the first plate member includes a doubled structure formed by a folding-back process, in an area overlapping with the engine-side attachment surface when viewed in the axial direction.

### [Supplementary Note 3]

The damper device according to Supplementary Note 1, wherein
the second rotating member extends in a planar shape perpendicular to the axial direction, at a center of the coil spring in the axial direction, and on a radial-direction inner side of the coil spring.

### [Supplementary Note 4]

The damper device according to any one of Supplementary Notes 1 to 3, wherein
the first rotating member further includes a second plate member that forms an arrangement space for the second rotating member and the coil spring between the first rotating member and the first plate member in the axial direction, and
the first plate member, the second plate member, and the annular member are fixed to one another by a common coupling member.

### [Supplementary Note 5]

The damper device according to any one of Supplementary Notes 1 to 4, wherein
the coupling member is oriented in such a way that a riveted portion included in the coupling member is located on a side closer to the engine in the axial direction, and
the riveted portion is located to be flush with the engine-side attachment surface or more distant from the engine than the engine-side attachment surface in the axial direction.

### [Supplementary Note 6]

The damper device according to any one of Supplementary Notes 1 to 5, wherein
the annular member integrally includes a first portion and a second portion, the first portion being closer to the engine in the axial direction than the first plate member, the second portion being more distant from the engine in the axial direction than the first plate member, and
the first portion has mass significantly larger than that of the second portion.

### [Supplementary Note 7]

The damper device according to Supplementary Note 6, wherein
the second portion does not overlap with the second plate member when viewed in the axial direction.

### [Supplementary Note 8]

The damper device according to any one of Supplementary Notes 1 to 7, wherein
the offset surface extends to a position being on a side closer to the engine in the axial direction than the coil spring.

### [Supplementary Note 9]

The damper device according to any one of Supplementary Notes 2 to 8, wherein
the offset surface extends continuously both in a radial-direction area on a radial-direction outer side of the engine-side attachment surface and on a radial-direction inner side of the coil spring and in a radial-direction area overlapping with the coil spring when viewed in the axial direction.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A damper device (1) comprising:
a first rotating member (10) to which power of an engine is input and that is rotatable around a rotational axis (I) extending in an axial direction;
a second rotating member (20) that is rotatable around the rotational axis (I) relative to the first rotating member (10); and
a coil spring (40) that is compressed between the first rotating member (10) and the second rotating member (20), wherein
the first rotating member (10) includes:
a first plate member (100) forming an engine-side attachment surface (121) that faces to an engine side in the axial direction and that is perpendicular to the rotational axis (I); and
an annular member (300) that has an annular shape around the rotational axis (I) when viewed in the axial direction and that is coupled to the first plate member (100),
the first plate member (100) further forms an offset surface (132) that faces to an engine side in the axial direction and that is offset from the engine-side attachment surface (121) to a side separated from the engine in the axial direction,
a radial-direction area of the offset surface (132) includes an area being on a radial-direction outer side of the engine-side attachment surface (121) and on a radial-direction inner side of the coil spring (40), and
the annular member (300) overlaps with the offset surface (132) when viewed in the axial direction.

2. The damper device (1) according to Claim 1, wherein
the first plate member (100) includes a doubled structure formed by a folding-back process, in an area overlapping with the engine-side attachment surface (121) when viewed in the axial direction.

3. The damper device (1) according to Claim 1 or 2, wherein
the second rotating member (20) extends in a planar shape perpendicular to the axial direction, at a center of the coil spring (40) in the axial direction, and on a radial-direction inner side of the coil spring (40).

4. The damper device (1) according to any one of Claims 1 to 3, wherein
the first rotating member (10) further includes a second plate member (200) that forms an arrangement space (S4) for the second rotating member (20) and the coil spring (40) between the first rotating member (10) and the first plate member (100) in the axial direction, and
the first plate member (100), the second plate member (200), and the annular member (300) are fixed to one another by a common coupling member (70).
